# FASCICULE DE BREVET EUROPEEN

(11) **EP 1 234 746 B1**
(45) Date de publication et mention de la délivrance du brevet: **20.04.2005**
(21) Numéro de dépôt: 02290399.1
(22) Date de dépôt: 19.02.2002
(51) Int. Cl.: B62D 6/00, B62D 6/04

(54) **Ensemble de direction assistée électrique pour véhicule automobile et procédé de commande associé**
Elektrische Servolenkung für ein Motorfahrzeug und dazu passendes Steuerungsverfahren
Electric power steering assembly for a motor vehicle and associated control method

(30) Priorité: 21.02.2001 FR 0102360
(43) Date de publication de la demande: 28.08.2002
(73) Titulaire: Peugeot Citroen Automobiles SA, 92200 Neuilly sur Seine (FR)
(72) Inventeur: Bernede, Dominique Marc, 92190 Meudon (FR)
(74) Mandataire: Jacobson, Claude

(56) Documents cités:
- EP-A- 0 716 948
- EP-A- 1 031 493
- DE-A- 4 128 639
- US-A- 5 072 804
- US-A- 6 154 696
- PATENT ABSTRACTS OF JAPAN vol. 1997, no. 01, 31 janvier 1997 (1997-01-31) -& JP 08 244635 A (HONDA MOTOR CO LTD), 24 septembre 1996 (1996-09-24)

## Description

L'invention se rapporte à un ensemble direction de véhicule automobile comportant un dispositif d'assistance électrique.

Elle concerne plus précisément un ensemble de direction assistée du type comprenant un arbre de direction rotatif portant à une extrémité un volant et à son autre extrémité un organe de transmission coopérant avec une crémaillère mobile en translation, reliée à chacune de ses extrémités à un mécanisme d'orientation des roues directrices du véhicule, le dispositif d'assistance comportant un moteur électrique qui entraîne un organe d'assistance coopérant avec la crémaillère ou l'arbre de direction, et un dispositif de commande fournissant audit moteur électrique un signal de commande adapté pour faire varier le couple de sortie du moteur électrique, en fonction d'un ensemble de paramètres de fonctionnement de l'arbre de direction et/ou plus généralement du véhicule (voir EP-A-1 031 493).

Dans les systèmes de direction assistée électrique connus de ce genre, le moteur électrique est commandé par un calculateur qui applique des lois de commande pré-programmées, sous la forme de cartographies, pour tenir compte de l'évolution de paramètres de fonctionnement du véhicule et de la direction. Ces paramètres de fonctionnement sont en général constitués par la vitesse du véhicule, le couple appliqué sur le volant et l'arbre de direction par le conducteur, et la vitesse de rotation du volant. Le calculateur délivre au moteur électrique, à partir de ces paramètres de fonctionnement et des lois de commande pré-programmées, un signal de commande de couple correspondant au couple moteur de sortie à délivrer pour exercer, sur la crémaillère, l'effort d'assistance désiré.

En général, il n'est pas prévu de boucle de régulation permettant de corriger le signal de commande émis vers le moteur en fonction de grandeurs mesurées, significatives d'un couple ou d'un effort d'assistance réellement délivré par le moteur.

Un dispositif d'assistance de ce type ne donne pas entière satisfaction pour plusieurs raisons. En particulier, il ne tient pas compte des conditions d'adhérence du véhicule sur la route, et il ne permet pas de corriger les perturbations sur le couple volant ressenties par le conducteur dues à des actions de freinage et/ou d'accélération introduites par des systèmes électroniques tels que des systèmes d'anti-blocage de roues, de contrôle global de châssis, ou de correction de trajectoire.

Un but principal de l'invention est de remédier à ces inconvénients et de proposer une direction assistée électrique qui n'altère pas les sensations de conduite, et qui compense les perturbations de systèmes électroniques de freinage et/ou d'accélération de roue.

D'autres buts de l'invention consistent à conserver au dispositif d'assistance ses performances tout au long de la durée de vie du véhicule, et de simplifier au maximum les réglages, pour un type de véhicule donné, rendus nécessaires par l'utilisation de cartographies.

A cet effet, suivant l'invention, le dispositif d'assistance comporte des moyens de mesure des efforts exercés par l'un au moins des mécanismes d'orientation sur la crémaillère, et des moyens de mesure du couple d'assistance exercé par le moteur sur l'organe d'assistance, et l'ensemble de paramètres comporte la valeur d'effort et la valeur de couple d'assistance mesurées par lesdits moyens de mesure.

Suivant d'autres caractéristiques :
- le dispositif d'assistance comporte des moyens de mesure de la vitesse du véhicule, et l'ensemble de paramètres comporte la valeur de vitesse mesurée par lesdits moyens de mesure ;
- le dispositif d'assistance comporte des moyens de mesure de l'accélération transversale du véhicule, et l'ensemble des paramètres comporte la valeur d'accélération mesurée par lesdits moyens de mesure ;
- le dispositif d'assistance comporte des moyens de mesure de la vitesse de rotation du volant, et l'ensemble des paramètres comporte la valeur de vitesse du volant mesurée par lesdits moyens de mesure ;
- le dispositif d'assistance comporte des moyens de mesure de la position angulaire du volant, et l'ensemble des paramètres comporte la position du volant mesurée par lesdits moyens de mesure ;
- le dispositif d'assistance comporte des moyens de mesure du couple exercé sur le volant par le conducteur, et l'ensemble des paramètres comporte le couple volant mesurée par lesdits moyens de mesure ;
- le dispositif de commande comporte un organe électronique de calcul et un organe électronique de régulation reliés entre eux, ledit organe électronique de calcul recevant en entrée un premier sous-ensemble de paramètres parmi ledit ensemble de paramètres et émettant en sortie un ensemble de valeurs de sortie, et ledit organe électronique de régulation recevant en entrée d'une part un deuxième sous-ensemble de paramètres parmi ledit ensemble de paramètres comportant au moins l'un des deux paramètres constitués par le couple volant mesuré et le couple d'assistance mesuré, et d'autre part ledit ensemble de valeurs de sortie de l'organe électronique de calcul, et émettant en sortie une valeur de couple de commande du moteur, correspondant au signal de commande de couple ;
- le premier sous-ensemble de paramètres reçus à l'entrée de l'organe électronique de calcul comprend le paramètre d'effort mesuré ;
- l'ensemble de valeurs de sortie de l'organe électronique de calcul comporte une valeur de couple volant de consigne ;
- l'organe électronique de calcul comporte un premier module de calcul d'effort modélisé, émettant une valeur de sortie correspondant à un modèle d'effort de mécanisme d'orientation calculé en fonction de paramètres d'entrées dudit module ;
- lesdits paramètres d'entrée dudit module comportent le paramètre de vitesse du véhicule et le paramètre de position angulaire du volant ;
- l'organe électronique de calcul comporte un module de calcul d'adhérence délivrant en sortie au moins une valeur de sortie significative de conditions d'adhérence du véhicule sur la route ;
- lesdites valeurs de sortie dudit module de calcul d'adhérence comportent une première valeur de sortie comprise entre 0 et 1, et une deuxième valeur de sortie choisie parmi trois valeurs prédéterminées, notamment respectivement égales à 0.25, 0.6 et 1, comprises entre 0 et 1 ;
- les paramètres d'entrée dudit module de calcul d'adhérence comportent le paramètre de vitesse volant et le paramètre d'effort ;
- ledit module de calcul d'adhérence reçoit en entrée la valeur de sortie du module de calcul d'effort modélisé ;
- l'organe électronique de calcul comporte un module de calcul de couple volant de consigne délivrant en sortie une valeur de sortie significative d'un couple volant de consigne calculé en fonction de paramètres et de valeurs reçus en entrée ;
- les paramètres reçus en entrée par ledit module de calcul de couple volant de consigne comprennent le paramètre de vitesse du véhicule, le paramètre d'accélération transversale du véhicule, le paramètre de vitesse du volant, et le paramètre de position du volant ;
- les valeurs reçues en entrée dudit module de calcul de couple volant de consigne comportent une valeur de sortie du module de calcul d'adhérence ;
- l'organe électronique de calcul comporte un module de calcul d'état de régulation délivrant en sortie une valeur de sortie égale à 0 ou 1, calculée en fonction de paramètres d'entrée et de valeurs reçus en entrée dudit module de calcul d'état de régulation ;
- les paramètres d'entrée dudit module de calcul d'état de régulation comprennent le paramètre de vitesse volant et le paramètre de couple volant ;
- ledit module de calcul d'état de régulation reçoit en entrée la valeur de sortie du module de calcul de couple de volant de consigne ;
- l'organe électronique de régulation reçoit en entrée le paramètre de couple d'assistance mesuré ;
- l'organe électronique de régulation reçoit en entrée le paramètre de couple volant mesuré ;
- l'organe électronique de régulation comporte deux organes de régulation reliés entre eux, le premier organe de régulation émettant une valeur de sortie en fonction d'un premier sous-ensemble de paramètres et de valeurs reçus en entrée de l'organe électronique de régulation, et le deuxième organe de régulation délivrant en sortie la valeur de commande de couple calculée en fonction de paramètres et de valeurs d'entrée comportant des paramètres et des valeurs d'entrée de l'organe électronique de régulation et la valeur de sortie du premier organe de régulation ;
- les paramètres et valeurs d'entrée du premier organe de régulation comprennent la valeur de couple de volant de consigne émise en sortie de l'organe électronique de calcul et le paramètre de couple volant mesuré, la valeur de sortie dudit premier organe de régulation étant significative d'une valeur de couple d'assistance de consigne calculée en fonction de la différence des valeurs de couple volant de consigne et de couple de volant mesuré ;
- les paramètres et valeurs d'entrée du deuxième organe de régulation comportent le paramètre de couple volant mesuré et le paramètre de couple d'assistance mesuré, ledit deuxième organe de régulation délivrant en sortie la valeur de commande de couple calculée en fonction de la différence de la valeur de couple d'assistance de consigne calculée par le premier organe de régulation et de la valeur de couple d'assistance mesuré ;
- l'un au moins des organes de régulation est un régulateur de type P.I.D. ; et
- l'un au moins des organes de régulation reçoit en entrée la valeur de sortie du module de calcul d'état de régulation, et délivre en sortie une valeur dépendante de ladite valeur d'état de régulation.

L'invention vise également un procédé de commande, par un signal de commande de couple, du moteur électrique d'un dispositif d'assistance électrique tel que décrit précédemment, selon lequel on élabore le signal de commande de couple de la façon suivante :
- on mesure le paramètre d'effort correspondant à la valeur des efforts exercés par l'un au moins des mécanismes d'orientation sur la crémaillère;
- on calcule une valeur de couple volant de consigne en fonction d'un ensemble de paramètres de fonctionnement de l'arbre de direction et/ou plus généralement du véhicule, ledit ensemble comprenant ledit paramètre d'effort mesuré ;
- on mesure la valeur du couple exercé par le conducteur sur le volant;
- on calcule une valeur de commande de couple moteur suivant un procédé de régulation en fonction de la différence entre le couple volant mesuré et le couple de volant de consigne;
- on élabore le signal de commande de couple qui correspond à ladite valeur de commande de couple.

Suivant d'autres caractéristiques du procédé suivant l'invention :
- le procédé de régulation comprend une première boucle de régulation dans laquelle on calcule un couple d'assistance de consigne en fonction de la différence entre le paramètre de couple volant mesuré (P₅) et la valeur de couple volant de consigne calculée ;
- ladite première boucle de régulation applique à la différence entre le paramètre de couple volant mesuré et la valeur de couple volant de consigne une première loi de régulation P.I.D. dont les coefficients sont prédéterminés ;
- on mesure le couple d'assistance exercé par le moteur sur l'organe d'assistance ;
- le procédé de régulation comprend une deuxième boucle de régulation dans laquelle on calcule le couple de commande du moteur en fonction de la différence entre ledit paramètre de couple d'assistance mesuré et la valeur du couple d'assistance de consigne ;
- ladite deuxième boucle de régulation applique à la différence entre le paramètre de couple d'assistance mesuré et la valeur du couple d'assistance de consigne calculée, une deuxième loi de régulation P.I.D. dont les coefficients sont prédéterminés ;
- on calcule la valeur de couple volant de consigne suivant un procédé de calcul qui comprend les étapes suivantes :
   . on mesure un paramètre de vitesse de véhicule;
   . on mesure un paramètre de position angulaire du volant significatif de la position angulaire du volant par rapport à une position neutre de braquage nul ;
   . on calcule une valeur théorique d'effort de mécanisme d'orientation en fonction desdits paramètres de vitesse du véhicule et de position du volant mesurés, au moyen d'une cartographie à deux entrées.
- le procédé de calcul comprend en outre les étapes suivantes :
   . on mesure un paramètre de vitesse de rotation du volant;
   . on calcule, en fonction dudit paramètre de vitesse de rotation du volant mesuré, du paramètre d'effort mesuré, et de la valeur théorique d'effort calculée, un coefficient de couple volant significatif des conditions d'adhérence du véhicule sur la route, ainsi qu'un coefficient d'adhérence qui peut prendre sélectivement l'une parmi au moins deux valeurs fixes significatives de conditions d'adhérence respectives ;
- le coefficient de couple volant calculé est compris dans un intervalle entre 0 et 1, et le coefficient d'adhérence modifié peut prendre sélectivement l'une de trois valeurs égales à 0.25, 0.6 et 1 ;
- le procédé de calcul comporte en outre les étapes suivantes :
   . on mesure la valeur du paramètre d'accélération transversale du véhicule ;
   . on calcule la valeur de couple volant de consigne en fonction des paramètres mesurés de vitesse du véhicule, d'accélération transversale du véhicule, de vitesse angulaire du volant, de position angulaire du volant, et du coefficient calculé de couple volant ;
   . on calcule la valeur du couple volant de consigne au moyen d'une cartographie à deux entrées recevant les valeurs des paramètres de vitesse et d'accélération transversale du véhicule, et qui délivre une valeur de sortie corrigée par des coefficients intermédiaires significatifs respectivement du paramètre de vitesse angulaire du volant, du paramètre à deux positions angulaires du volant, et du coefficient de couple volant, la valeur du couple volant de consigne étant égale au produit de ladite valeur de sortie de cartographie et desdits coefficients intermédiaires ;
- le procédé de calcul comporte en outre l'étape suivante :
   . on calcule une valeur d'état de régulation, égale soit à 0 soit à 1, en fonction des paramètres de vitesse angulaire du volant et de couple volant mesurés, du couple volant de consigne calculé, et du coefficient d'adhérence modifié calculé ;
- la valeur d'état de régulation est égale à 1 si la valeur de paramètre du couple volant mesuré est de même signe que la valeur du couple volant de consigne calculé et si la valeur absolue du paramètre de couple volant mesuré est supérieure à la valeur absolue de la valeur de couple volant de consigne calculée ;
- on calcule le couple d'assistance de consigne en fonction de la valeur d'état de régulation et de la valeur du coefficient d'adhérence modifiée calculées ;
- si la valeur d'état de régulation calculée est égale à 0, la valeur du couple d'assistance de consigne est égale à 0 ; et
- on calcule la valeur de commande de couple en fonction de la valeur d'état de régulation calculée.

L'invention vise enfin un véhicule automobile comportant un ensemble de direction assistée tel que décrit précédemment, ou un ensemble de direction assistée fonctionnant selon le procédé ci-dessus.

L'invention va maintenant être décrite en regard des dessins annexés, donnés uniquement à titre d'exemple et sur lesquels :
- la Figure 1 est une vue schématique d'un ensemble de direction assistée suivant l'invention ; et
- la Figure 2 est un schéma du dispositif électrique de commande du moteur électrique de l'ensemble représenté à la Figure 1.

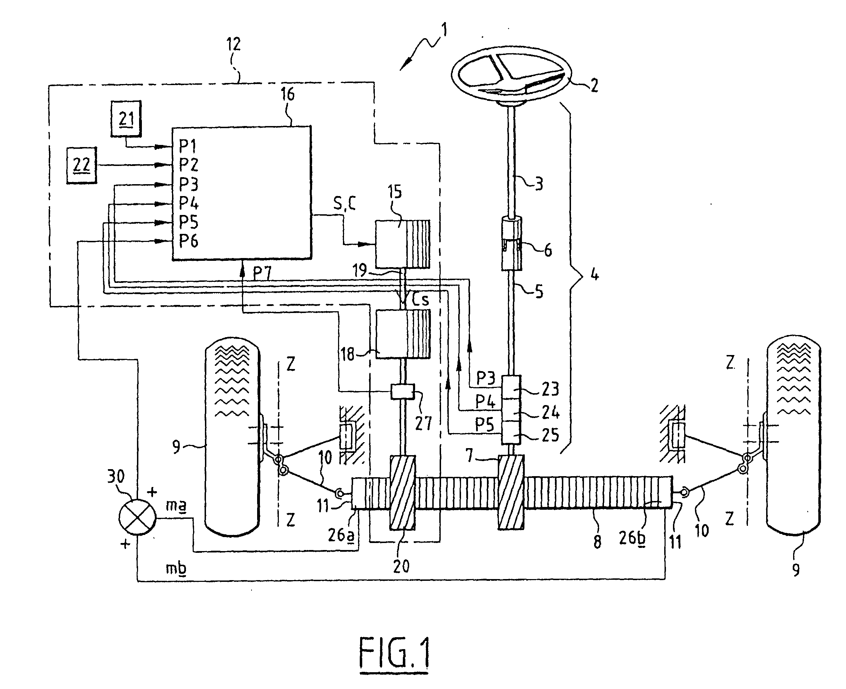

A la Figure 1, on a représenté un ensemble de direction 1 de véhicule automobile assistée électriquement, qui comporte un volant 2 solidaire d'un premier tronçon 3 d'un arbre de direction 4, relié à un deuxième tronçon 5 de cet arbre de direction 4, par l'intermédiaire d'une liaison à cardan 6. L'arbre de direction 4 est ici composé de deux tronçons 3, 4 articulés, mais pourrait être constitué d'une pièce. L'arbre de direction 4 transmet le couple appliqué sur le volant 2 par le conducteur du véhicule à un pignon de transmission 7, qui engrène avec une crémaillère de direction 8 disposée transversalement par rapport à l'axe du véhicule entre deux roues directrices 9. Le pignon de transmission 7 pourrait être remplacé par tout autre organe de transmission adapté, comme par exemple une vis sans fin. Chaque roue directrice 9 est susceptible de pivoter autour d'un axe de pivotement vertical Z sous l'effet d'un déplacement linéaire de la crémaillère 8, ladite roue directrice 9 étant actionnée par un mécanisme d'orientation comportant une biellette 10 reliée à une extrémité 11 de la crémaillère 8.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction de plusieurs paramètres P₁, P₂, P₃, P₄, P₅, P₆, P₇ de fonctionnement du véhicule et de fonctionnement de la direction.

Le dispositif d'assistance 12 comprend un moteur électrique 15 dont le couple de sortie Cₛ est commandé par un dispositif électronique de commande 16 qui délivre au moteur un signal de commande de couple S significatif d'une valeur de commande de couple C. Le couple de sortie Cₛ du moteur électrique 15 est transmis à un réducteur 18 par l'intermédiaire de l'arbre de sortie 19 du moteur 15, et à un pignon d'assistance 20 engrenant avec la crémaillère 8.

Le premier paramètre P₁ est constitué par la valeur de vitesse du véhicule, déterminée par des moyens classiques de mesure de la vitesse présents usuellement sur les véhicules, ces moyens étant représentés sur la Figure 1 par un capteur 21.

Le deuxième paramètre P₂ est constitué par la valeur d'accélération transversale du véhicule, déterminée par un capteur d'accélération transversale 22.

Le troisième paramètre P₃ est constitué par la valeur de vitesse de rotation du volant 2, mesurée par un capteur de vitesse de rotation 23 monté sur l'arbre de direction 4.

Le quatrième paramètre P₄ est constitué par un paramètre de position angulaire du volant 2, c'est-à-dire par une valeur de l'angle de rotation du volant 2 par rapport à la position neutre de braquage nul du volant, la valeur de ce paramètre P₄ étant obtenue par un capteur de position angulaire 24 monté sur l'arbre de direction 4.

Le cinquième paramètre P₅ est constitué par la valeur de couple volant, c'est-à-dire la valeur du couple appliqué par le conducteur sur le volant 2, ce paramètre P₅ étant mesuré par un capteur de couple 25 monté sur l'arbre de direction 4.

Le sixième paramètre P₆ est constitué par la valeur des efforts exercés par les biellettes 10 sur la crémaillère 8, cette valeur étant mesurée au moyen de deux capteurs d'effort 26a, 26b montés chacun à une extrémité 11 de la crémaillère 8 et adaptés pour mesurer l'effort exercé par la biellette 10 respective sur la crémaillère 8. Chaque capteur d'effort 26a, 26b fournit à un sommateur 30 la valeur respective mesurée ma, mb, le sommateur 30 délivrant à l'organe électronique de commande 16 le paramètre P₆ correspondant à l'effort résultant des efforts ma, mb mesurés.

Le septième paramètre P₇ est constitué par la valeur de couple d'assistance correspondant au couple transmis par le moteur 15 au pignon d'assistance 20, et mesurée au moyen d'un capteur de couple 27 interposé, dans la chaîne de transmission, entre le réducteur 18 et le pignon d'assistance 20.

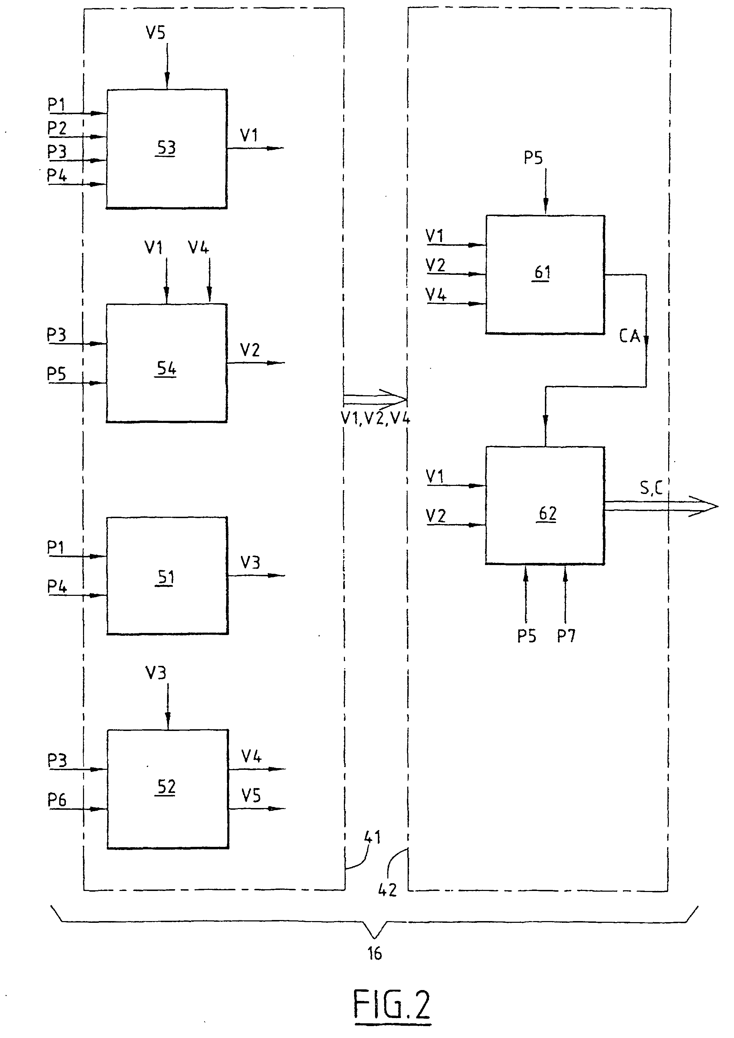

Comme représenté à la Figure 2, le dispositif électronique de commande 16 comporte un organe électronique de calcul 41 et un organe électronique de régulation 42.

L'organe électronique de régulation 42 est relié aux moyens de mesure correspondant aux six premiers paramètres P₁... P₆ énumérés ci-dessus de façon à recevoir, à chaque instant, la valeur mesurée desdits paramètres P₁... P₆, lesquels constituent un premier sous-ensemble de paramètres. Les paramètres de ce premier sous-ensemble sont traités par quatre modules de calcul 51, 52, 53, 54 délivrant en sortie de valeur de sortie V₁, V₂, V₃, V₄, V₅.

Le premier module de calcul 51 reçoit en entrée le paramètre de vitesse du véhicule P₁ et le paramètre de position du volant P₄ et calcule une valeur théorique d'effort-biellettes V₃ en fonction des deux paramètres d'entrée P₁, P₄. Cette valeur V₃ est obtenue à partir d'une cartographie à deux entrées correspondant à un modèle préenregistré, mis au point pour un véhicule donné.

Le deuxième module 52 reçoit en entrée la valeur V₃ ainsi déterminée, et les paramètres d'entrée correspondant à la vitesse du volant P₃ et à la valeur des efforts-biellettes mesurée P₆. Ce module 52 calcule et délivre en sortie deux valeurs de sortie V₄, V₅ significatives de conditions d'adhérence du véhicule sur la route. Plus précisément, le deuxième module 52 réalise le calcul de la différence du paramètre d'effort-biellettes mesuré P₆ avec la valeur calculée V₃ par le premier module 51, c'est-à-dire la valeur d'effort théorique. Cette différence est traitée de façon à obtenir un coefficient d'adhérence correspondant à une première valeur de sortie V₅ du module, comprise entre 0 et 1. La deuxième valeur de sortie V₄ du module est choisie parmi trois valeurs prédéterminées en fonction du coefficient d'adhérence compris entre 0 et 1, et de la vitesse du volant mesurée P₃. Ces valeurs prédéterminées sont également comprises entre 0 et 1, elles sont de préférence égales à 0.25, 0.6 et 1. Ces valeurs modélisent des conditions-types de route, à savoir respectivement des conditions de verglas ou neige, des conditions de pluie, et des conditions de route sèche.

Le troisième module de calcul 53 reçoit en entrée d'une part les quatre premiers paramètres d'entrée P₁...P₄ du dispositif électronique de commande 16, et d'autre part la première valeur de sortie V₅ du deuxième module de calcul 52, correspondant au coefficient d'adhérence calculé. Ce troisième module de calcul 53 calcule et émet en sortie une valeur de sortie V₁ significative d'un couple volant de consigne. Cette valeur V₁ de couple au volant de consigne est obtenue au moyen d'une cartographie à deux entrées, les deux entrées de cartographie étant constituées de valeurs formées à partir respectivement de la vitesse du véhicule P₁ et de l'accélération transversale P₂. La valeur de sortie de la cartographie est multipliée par deux coefficients correcteurs obtenus respectivement à partir de la vitesse de rotation du volant P₃ et de la position angulaire du volant P₄. La valeur de sortie V₁ du module de calcul 53 de couple volant de consigne est obtenue par le produit du résultat de cette opération par le coefficient d'adhérence V₅.

Le quatrième module de calcul 54 reçoit en entrée les paramètres de vitesse de rotation du volant P₃ et de couple volant P₅, ainsi que la valeur de sortie V₁ du module 53 de calcul de couple-volant de consigne. Ce module de calcul délivre en sortie une valeur de sortie V₂ égale à 0 ou 1, correspondant à une valeur d'état de régulation, utilisée pour neutraliser le fonctionnement de l'organe électronique de régulation 42 dans le cas où cette valeur de sortie V₂ est égale à 0. Le module 54 de calcul d'état de régulation effectue la différence du couple volant de consigne V₁ et du couple volant mesuré P₅, ainsi que la différence de leur valeur absolue, et traite ces valeurs, ainsi que le paramètre de vitesse du volant P₃ et la valeur d'adhérence V₄ par des opérateurs logiques.

L'organe électronique de calcul 41 est relié à l'organe électronique de régulation 42 de façon à lui transmettre les valeurs calculées de couple au volant de consigne V₁, d'état de la régulation V₂ et d'adhérence V₄.

L'organe électronique de régulation 42 comprend deux régulateurs de type proportionnel-intégral-dérivé (PID) 61, 62 correspondant chacun à une boucle de régulation. Chaque régulateur 61, 62 présente une équation caractéristique dont les coefficients, respectivement proportionnel K_{P1}, K_{P2}, intégral K_{I1}, K_{I2} et dérivé K_{D1}, K_{D2}, sont prédéterminés.

Le premier régulateur 61 reçoit en entrée les trois valeurs V₁, V₂, V₃ de sortie de l'organe électronique de calcul 41 transmise à l'organe électronique de régulation 42, ainsi que le paramètre de couple volant mesuré P₅, cette boucle de régulation s'effectuant sur le couple volant. En sortie, le premier régulateur 61 délivre une valeur de couple d'assistance de consigne C_{A}. Si la valeur d'état de régulation V₂ est nulle, ce qui signifie que l'organe électronique de régulation doit être neutralisé ou "gelé" , le couple d'assistance de consigne C_{A} en sortie du premier régulateur est nulle. Dans le cas contraire, le premier régulateur 61 calcule deux valeurs dépendantes de la différence entre le couple volant de consigne V₁ et le couple volant mesuré P₅, le couple d'assistance de consigne C_{A} étant obtenu à partir de l'une de ces deux valeurs choisies en fonction de la valeur d'adhérence V₄.

Le deuxième régulateur 62 reçoit en entrée les valeurs calculées de couple volant de consigne V₁ et d'état de régulation V₂, ainsi que les paramètres mesurés de couple volant P₅ et de couple d'assistance P₇. Il délivre en sortie la valeur de couple de commande moteur C, ou de façon correspondante, le signal de commande de couple S. Le deuxième régulateur 62 correspond à une boucle de régulation sur le couple d'assistance, c'est-à-dire que le couple de commande moteur C est élaboré en fonction de la différence, calculée par le deuxième régulateur 62, du couple d'assistance de consigne V₁ et du couple d'assistance mesuré P₇. Cette différence V₁-P₇, calculée à chaque instant, est multipliée par un coefficient dépendant du couple volant de consigne V₁, du couple volant mesuré P₅, et de la valeur d'état de régulation V₂, le produit final, fonction du temps, étant traité par l'équation caractéristique du régulateur 62.

## Revendications

1. Ensemble de direction assistée électrique comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme (10) d'orientation des roues directrices du véhicule, le dispositif d'assistance (12) comportant un moteur électrique (15) qui entraîne un organe d'assistance (20) coopérant avec la crémaillère (8) ou l'arbre de direction (4), et un dispositif de commande (16) fournissant audit moteur électrique (15) un signal de commande (S) adapté pour faire varier le couple de sortie (Cₛ) du moteur électrique (15), en fonction d'un ensemble (P₁, P₂, P₃, P₄, P₅, P₆, P₇) de paramètres de fonctionnement de l'arbre de direction et/ou plus généralement du véhicule, **caractérisé en ce que** le dispositif d'assistance (12) comporte des moyens (26a, 26b)de mesure des efforts exercés par l'un au moins des mécanismes d'orientation (10) sur la crémaillère (8), et des moyens (27) de mesure du couple d'assistance exercé par le moteur (15) sur l'organe d'assistance (20), et **en ce que** l'ensemble de paramètres (P₁, P₂, P₃, P₄, P₅, P₆, P₇) comporte la valeur d'effort (P₆) et la valeur de couple d'assistance (P₇) mesurées par lesdits moyens de mesure (26a, 26b, 27).

2. Ensemble de direction assistée électrique suivant la revendication 1, **caractérisé en ce que** le dispositif d'assistance (12) comporte des moyens (21) de mesure de la vitesse du véhicule, et l'ensemble de paramètres (P₁, P₂, P₃, P₄, P₅, P₆, P₇) comporte la valeur de vitesse (P₁) mesurée par lesdits moyens de mesure (21).

3. Ensemble de direction assistée électrique suivant la revendication 1, **caractérisé en ce que** le dispositif d'assistance (12) comporte des moyens (22) de mesure de l'accélération transversale du véhicule, et l'ensemble des paramètres (P₁, P₂, P₃, P₄, P₅, P₆, P₇) comporte la valeur d'accélération (P₂) mesurée par lesdits moyens de mesure (22).

4. Ensemble de direction assistée électrique suivant la revendication 1, **caractérisé en ce que** le dispositif d'assistance (12) comporte des moyens (23) de mesure de la vitesse de rotation du volant (2), et l'ensemble des paramètres (P₁, P₂, P₃, P₄, P₅, P₆, P₇) comporte la valeur de vitesse du volant (P₃) mesurée par lesdits moyens de mesure (23).

5. Ensemble de direction assistée électrique suivant la revendication 1, **caractérisé en ce que** le dispositif d'assistance (12) comporte des moyens (24) de mesure de la position angulaire du volant (2), et l'ensemble des paramètres (P₁, P₂, P₃, P₄, P₅, P₆, P₇) comporte la position du volant (P₄) mesurée par lesdits moyens de mesure (24).

6. Ensemble de direction assistée électrique suivant la revendication 1, **caractérisé en ce que** le dispositif d'assistance (12) comporte des moyens (25) de mesure du couple exercé sur le volant (2) par le conducteur, et l'ensemble des paramètres (P₁, P₂, P₃, P₄, P₅, P₆, P₇) comporte le couple volant (P₅) mesurée par lesdits moyens de mesure (25).

7. Ensemble de direction assistée électrique suivant la revendication 1 ou 6, **caractérisé en ce que** le dispositif de commande (16) comporte un organe électronique de calcul (41) et un organe électronique de régulation (42) reliés entre eux, ledit organe électronique de calcul (41) recevant en entrée un premier sous-ensemble de paramètres (P₁, P₂, P₃, P₄, P₅, P₆) parmi ledit ensemble de paramètres (P₁, P₂, P₃, P₄, P₅, P₆, P₇) et émettant en sortie un ensemble de valeurs de sortie (V₁, V₂, V₄), et ledit organe électronique de régulation (42) recevant en entrée d'une part un deuxième sous-ensemble de paramètres (P₅, P₇) parmi ledit ensemble de paramètres (P₁, P₂, P₃, P₄, P₅, P₆, P₇) comportant au moins l'un des deux paramètres constitués par le couple volant mesuré (P₅) et le couple d'assistance mesuré (P₇), et d'autre part ledit ensemble de valeurs de sortie (V₁, V₂, V₄) de l'organe électronique de calcul (41), et émettant en sortie une valeur de couple de commande (C) du moteur, correspondant au signal de commande de couple (S) .

8. Ensemble de direction assistée électrique suivant la revendication 7, **caractérisé en ce que** le premier sous-ensemble (P₁, P₂, P₃, P₄, P₅, P₆) de paramètres reçus à l'entrée de l'organe électronique de calcul (41) comprend le paramètre d'effort mesuré (P₆).

9. Ensemble de direction assistée électrique suivant la revendication 7 ou 8, **caractérisé en ce que** l'ensemble de valeurs de sortie (V₁, V₂, V₄) de l'organe électronique de calcul (41) comporte une valeur de couple volant de consigne (V₁).

10. Ensemble de direction assistée électrique suivant l'une quelconque des revendications 7 à 9, **caractérisé en ce que** l'organe électronique de calcul (41) comporte un premier module (51) de calcul d'effort modélisé, émettant une valeur de sortie (V₃) correspondant à un modèle d'effort de mécanisme d'orientation calculé en fonction de paramètres d'entrées (P₁, P₄) dudit module.

11. Ensemble de direction assistée électrique suivant les revendications 2, 5 et 10 prises ensemble, **caractérisé en ce que** lesdits paramètres d'entrée (P₁, P₄) dudit module (51) comportent le paramètre de vitesse du véhicule (P₁) et le paramètre de position angulaire du volant (P₄).

12. Ensemble de direction assistée électrique suivant l'une quelconque des revendications 7 à 11, **caractérisé en ce que** l'organe électronique de calcul (41) comporte un module de calcul d'adhérence (52) délivrant en sortie au moins une valeur de sortie (V₄, V₅) significative de conditions d'adhérence du véhicule sur la route.

13. Ensemble de direction assistée électrique suivant la revendication 12, **caractérisé en ce que** lesdites valeurs de sortie (V₄, V₅) dudit module de calcul d'adhérence (52) comportent une première valeur de sortie (V₅) comprise entre 0 et 1, et une deuxième valeur de sortie (V₄) choisie parmi trois valeurs prédéterminées, notamment respectivement égales à 0.25, 0.6 et 1, comprises entre 0 et 1.

14. Ensemble de direction assistée électrique suivant la revendication 12 ou 13, **caractérisé en ce que** les paramètres d'entrée dudit module de calcul d'adhérence (52) comportent le paramètre de vitesse volant (P₃) et le paramètre d'effort (P₆).

15. Ensemble de direction assistée électrique suivant les revendications 10 et 14 prises ensemble, **caractérisé en ce que** ledit module de calcul d'adhérence (52) reçoit en entrée la valeur de sortie (V₃) du module (51) de calcul d'effort modélisé.

16. Ensemble de direction assistée électrique suivant l'une quelconque des revendications 7 à 15, **caractérisé en ce que** l'organe électronique de calcul (41) comporte un module (53) de calcul de couple volant de consigne délivrant en sortie une valeur de sortie (V₁) significative d'un couple volant de consigne calculé en fonction de paramètres (P₁, P₂, P₃, P₄) et de valeurs (V₅) reçus en entrée.

17. Ensemble de direction assistée électrique suivant les revendications 2 à 5 et 16 prises ensemble, **caractérisé en ce que** les paramètres (P₁, P₂, P₃, P₄) reçus en entrée par ledit module (53) de calcul de couple volant de consigne comprennent le paramètre de vitesse du véhicule (P₁), le paramètre d'accélération transversale du véhicule (P₂), le paramètre de vitesse du volant (P₃), et le paramètre de position du volant (P₄).

18. Ensemble de direction assistée électrique suivant les revendications 12 et 16 prises ensemble, **caractérisé en ce que** les valeurs reçues en entrée dudit module de calcul (53) de couple volant de consigne comportent une valeur de sortie (V₅) du module de calcul d'adhérence (52).

19. Ensemble de direction assistée électrique suivant l'une quelconque des revendications 7 à 18, **caractérisé en ce que** l'organe électronique de calcul (41) comporte un module de calcul d'état de régulation (54) délivrant en sortie une valeur de sortie (V₂) égale à 0 ou 1, calculée en fonction de paramètres d'entrée (P₃, P₅) et de valeurs (V₁) reçus en entrée dudit module de calcul d'état de régulation (54).

20. Ensemble de direction assistée électrique suivant les revendications 4, 6 et 19 prises ensemble, **caractérisé en ce que** les paramètres d'entrée (P₃, P₅) dudit module de calcul d'état de régulation comprennent le paramètre de vitesse volant (P₃) et le paramètre de couple volant (P₅).

21. Ensemble de direction assistée électrique suivant les revendications 16 et 19 prises ensemble, **caractérisé en ce que** ledit module de calcul d'état de régulation (54) reçoit en entrée la valeur de sortie (V₁) du module de calcul de couple de volant de consigne (53).

22. Ensemble de direction assistée électrique suivant l'une quelconque des revendications 7 à 21, **caractérisé en ce que** l'organe électronique de régulation (42) reçoit en entrée le paramètre de couple d'assistance mesuré (P₇).

23. Ensemble de direction assistée électrique suivant l'une quelconque des revendications 7 à 22, **caractérisé en ce que** l'organe électronique de régulation reçoit en entrée le paramètre de couple volant mesuré (P₅).

24. Ensemble de direction assistée électrique suivant l'une quelconque des revendications 7 à 23, **caractérisé en ce que** l'organe électronique de régulation comporte deux organes de régulation (61, 62) reliés entre eux, le premier organe de régulation (61) émettant une valeur de sortie (C_{A}) en fonction d'un premier sous-ensemble de paramètres et de valeurs (P₅, V₁, V₂, V₄) reçus en entrée de l'organe électronique de régulation (42), et le deuxième organe de régulation (62) délivrant en sortie la valeur de commande de couple (C) calculée en fonction de paramètres et de valeurs d'entrée (P₅, P₇, V₁, V₂) comportant des paramètres et des valeurs d'entrée de l'organe électronique de régulation (42) et la valeur de sortie du premier organe de régulation (61).

25. Ensemble de direction assistée électrique suivant les revendications 6, 9 et 24 prises ensemble, **caractérisé en ce que** les paramètres et valeurs d'entrée (P₅, V₁, V₂, V₄) du premier organe de régulation (61) comprennent la valeur de couple de volant de consigne (V₁) émise en sortie de l'organe électronique de calcul (41) et le paramètre de couple volant mesuré (P₅), la valeur de sortie dudit premier organe de régulation (61) étant significative d'une valeur de couple d'assistance de consigne (C_{A}) calculée en fonction de la différence (V₁-P₅) des valeurs de couple volant de consigne (V₁) et de couple de volant mesuré (P₅).

26. Ensemble de direction assistée électrique suivant les revendications 6, 9 et 24 prises ensemble, **caractérisé en ce que** les paramètres et valeurs d'entrée (P₅, P₇, V₁, V₂) du deuxième organe de régulation (62) comportent le paramètre de couple volant mesuré (P₅) et le paramètre de couple d'assistance mesuré (P₇), ledit deuxième organe de régulation (62) délivrant en sortie la valeur de commande de couple (C) calculée en fonction de la différence (C_{A}-P₇) de la valeur de couple d'assistance de consigne calculée par le premier organe de régulation (61) et de la valeur de couple d'assistance mesuré (P₇).

27. Ensemble de direction assistée électrique suivant l'une quelconque des revendications 24 à 26, **caractérisé en ce que** l'un au moins des organes de régulation (61, 62) est un régulateur de type P.I.D.

28. Ensemble de direction assistée électrique suivant les revendications 19 et 24 prises ensemble, **caractérisé en ce que** l'un au moins des organes de régulation (61, 62) reçoit en entrée la valeur de sortie (V₂) du module de calcul d'état de régulation (54), et délivre en sortie une valeur dépendante de ladite valeur d'état de régulation (V₂).

29. Procédé de commande, par un signal de commande de couple, du moteur électrique d'un dispositif d'assistance électrique d'un ensemble de direction de véhicule automobile, comprenant un arbre de direction rotatif (4) portant à une extrémité un volant (2) et à son autre extrémité un organe de transmission (7) coopérant avec une crémaillère (8) mobile en translation, reliée à chacune de ses extrémités (11) à un mécanisme (10) d'orientation des roues directrices du véhicule, le dispositif d'assistance (12) comportant un moteur électrique (15) qui entraîne un organe d'assistance (20) coopérant avec la crémaillère (8) ou l'arbre de direction (4), et un dispositif de commande (16) fournissant audit moteur électrique (15) un signal de commande (S) adapté pour faire varier le couple de sortie (C_{S}) du moteur électrique (15), **caractérisé en ce qu'**on élabore le signal de commande de couple (S) de la façon suivante :
- on mesure le paramètre d'effort (P₆) correspondant à la valeur des efforts exercés par l'un au moins des mécanismes d'orientation (10) sur la crémaillère (8) ;
- on calcule une valeur de couple volant de consigne (V₁) en fonction d'un ensemble (P₁, P₂, P₃, P₄, P₅, P₆) de paramètres de fonctionnement de l'arbre de direction et/ou plus généralement du véhicule, ledit ensemble comprenant ledit paramètre d'effort mesuré (P₆) ;
- on mesure la valeur du couple (P₅) exercé par le conducteur sur le volant (2) ;
- on calcule une valeur de commande de couple moteur (C) suivant un procédé de régulation en fonction de la différence entre le couple volant mesuré (P₅) et le couple de volant de consigne (V₁) ;
- on élabore le signal de commande de couple (S) qui correspond à ladite valeur de commande de couple (C).

30. Procédé de commande suivant la revendication 29, **caractérisé en ce que** le procédé de régulation comprend une première boucle de régulation dans laquelle on calcule un couple d'assistance de consigne (C_{A}) en fonction de la différence entre le paramètre de couple volant mesuré (P₅) et la valeur de couple volant de consigne (V₁) calculée.

31. Procédé de commande suivant la revendication 30, **caractérisé en ce que** ladite première boucle de régulation applique à la différence entre le paramètre de couple volant mesuré (P₅) et la valeur de couple volant de consigne (V₁) une première loi de régulation P.I.D. dont les coefficients (K_{P1}, K_{I1}, K_{D1}) sont prédéterminés.

32. Procédé de commande suivant la revendication 30 ou 31, **caractérisé en ce que** :
- on mesure le couple d'assistance (P₇) exercé par le moteur (15) sur l'organe d'assistance (20) ;
- le procédé de régulation comprend une deuxième boucle de régulation dans laquelle on calcule le couple de commande du moteur (C) en fonction de la différence entre ledit paramètre de couple d'assistance mesuré (P₇) et la valeur du couple d'assistance de consigne (C_{A}).

33. Procédé de commande suivant la revendication 32, **caractérisé en ce que** ladite deuxième boucle de régulation applique à la différence entre le paramètre de couple d'assistance mesuré (P₇) et la valeur du couple d'assistance de consigne (C_{A}) calculée, une deuxième loi de régulation P.I.D. dont les coefficients (K_{P2}, K_{I2}, K_{D2}) sont prédéterminés.

34. Procédé de commande suivant l'une quelconque des revendications 29 à 33, **caractérisé en ce qu'**on calcule la valeur de couple volant de consigne (V₁) suivant un procédé de calcul qui comprend les étapes suivantes :
- on mesure un paramètre de vitesse de véhicule (P₁) ;
- on mesure un paramètre de position angulaire du volant (P₄) significatif de la position angulaire du volant (2) par rapport à une position neutre de braquage nul ;
- on calcule une valeur théorique d'effort de mécanisme d'orientation (V₃) en fonction desdits paramètres de vitesse du véhicule (P₁) et de position du volant (P₄) mesurés, au moyen d'une cartographie à deux entrées.

35. Procédé de commande suivant la revendication 34, **caractérisé en ce que** le procédé de calcul comprend en outre les étapes suivantes :
- on mesure un paramètre de vitesse de rotation du volant (P₃) ;
- on calcule, en fonction dudit paramètre de vitesse de rotation du volant (P₃) mesuré, du paramètre d'effort mesuré (P₆), et de la valeur théorique d'effort (V₃) calculée, un coefficient de couple volant (V₅) significatif des conditions d'adhérence du véhicule sur la route, ainsi qu'un coefficient d'adhérence (V₄) qui peut prendre sélectivement l'une parmi au moins deux valeurs- fixes, significatives de conditions d'adhérence respectives.

36. Procédé de commande suivant la revendication 35, **caractérisé en ce que** le coefficient de couple volant (V₅) calculé est compris dans un intervalle entre 0 et 1 et le coefficient d'adhérence modifié (V₄) peut prendre sélectivement l'une de trois valeurs égales à 0.25, 0.6 et 1.

37. Procédé de commande suivant la revendication 36, **caractérisé en ce que** le procédé de calcul comporte en outre les étapes suivantes :
- on mesure la valeur du paramètre d'accélération transversale du véhicule (P₂) ;
- on calcule la valeur de couple volant de consigne (V₁) en fonction des paramètres mesurés de vitesse du véhicule (P₁), d'accélération transversale du véhicule (P₂), de vitesse angulaire du volant (P₃), de position angulaire du volant (P₄), et du coefficient calculé de couple volant (V₅₎.

38. Procédé de commande suivant la revendication 37, **caractérisé en ce qu'**on calcule la valeur du couple volant de consigne (V₁) au moyen d'une cartographie à deux entrées recevant les valeurs des paramètres de vitesse (P₁) et d'accélération transversale (P₂) du véhicule, et qui délivre une valeur de sortie corrigée par des coefficients intermédiaires significatifs respectivement du paramètre de vitesse angulaire du volant (P₃), du paramètre à deux positions angulaires du volant (P₄), et du coefficient de couple volant (V₅), la valeur du couple volant de consigne (V₁) étant égale au produit de ladite valeur de sortie de cartographie et desdits coefficients intermédiaires.

39. Procédé de commande suivant la revendication 37 ou 38, **caractérisé en ce que** le procédé de calcul comporte en outre l'étape suivante :
- on calcule une valeur d'état de régulation (V₂), égale soit à 0 soit à 1, en fonction des paramètres de vitesse angulaire du volant (P₃) et de couple volant (P₅) mesurés, du couple volant de consigne (V₁) calculé, et du coefficient d'adhérence modifié (V₄) calculé.

40. Procédé de commande suivant la revendication 39, **caractérisé en ce que** la valeur d'état de régulation (V₂) est égale à 1 si la valeur de paramètre du couple volant mesuré (P₅) est de même signe que la valeur du couple volant de consigne calculé (V₁), et si la valeur absolue du paramètre de couple volant (P₅) mesuré est supérieure à la valeur absolue de la valeur de couple volant de consigne (V₁) calculée.

41. Procédé de commande suivant les revendications 30 et 39 prises ensemble, **caractérisé en ce qu'**on calcule le couple d'assistance de consigne (C_{A}) en fonction de la valeur d'état de régulation (V₂) et de la valeur du coefficient d'adhérence modifiée (V₄) calculées.

42. Procédé de commande suivant la revendication 41, **caractérisé en ce que** si la valeur d'état de régulation (V₂) calculée est égale à 0, la valeur du couple d'assistance de consigne (C_{A}) est égale à 0.

43. Procédé de commande suivant les revendications 32 et 39 prises ensemble, **caractérisé en ce qu'**on calcule la valeur de commande de couple (C) en fonction de la valeur d'état de régulation (V₂) calculée.

44. Véhicule automobile comportant un ensemble de direction assistée suivant l'une quelconque des revendications 1 à 28, ou un ensemble de direction assistée fonctionnant selon le procédé suivant l'une quelconque des revendications 29 à 43.

## Patentansprüche

1. Elektrische Servolenkungsvorrichtung mit einer Drehlenksäule (4), die an einem Ende ein Lenkrad (2) und ihrem anderen Ende ein Übertragungselement (7) trägt, dass mit einer Zahnstange (8) zusammenarbeitet, die translationsbeweglich ist und an jedem ihrer beiden Enden (11) mit einem Mechanismus (10) zum Auslenken der gelenkten Räder des Fahrzeuges verbunden ist, wobei die Servoeinrichtung (12) einen Elektromotor (15), der ein Servoelement (20) antreibt, das mit der Zahnstange (8) oder Lenksäule (4) zusammenarbeitet, und eine Steuereinrichtung (16) umfasst, die dem besagten Elektromotor (15) ein Steuersignal (S) liefert, das dazu dient, das Ausgangsmoment (C_{S}) des Elektromotors (15) in Abhängigkeit von einer Gruppe von Funktionsparametern (P₁, P₂, P₃, P₄, P₅, P₆, P₇) der Lenksäule und/oder allgemein des Fahrzeuges zu ändern, **dadurch gekennzeichnet dass**, die Servoeinrichtung (12) Einrichtung (26a, 26b) zum Messen der Kräfte, die von wenigstens einem der Auslenkungsmechanismen (10) auf die Zahnstange (8) ausgeübt werden, und Einrichtung (27) zum Messen des Servomomentes umfasst, das vom Motor (15) auf das Servolement (20) ausgeübt wird, und dass Parametergruppe (P₁, P₂, P₃, P₄, P₅, P₆, P₇) den Wert der Kraft (P₆) und den Wert des Servomomentes (P₇) umfasst, die durch die besagten Messeinrichtungen (26a, 26b, 27) gemessen werden.

2. Elektrische Servolenkungsvorrichtung nach Anspruch 1, **dadurch gekennzeichnet, dass** die Servoeinrichtung (12) Einrichtungen (21) zum Messen der Geschwindigkeit des Fahrzeuges umfasst und dass die Parametergruppe (P₁, P₂, P₃, P₄, P₅, P₆, P₇) den Wert der Geschwindigkeit (P₁) umfasst, der durch diese Messeinrichtungen (21) gemessen wird.

3. Elektrische Servolenkungsvorrichtung nach Anspruch 1, **dadurch gekennzeichnet, dass** die Servoeinrichtung (12) Einrichtungen (22) zum Messen Querbeschleunigung des Fahrzeugs umfasst und dass die Parametergruppe (P₁, P₂, P₃, P₄, P₅, P₆, P₇) den Wert der Beschleunigung (P₂) umfasst, der durch diese Messeinrichtungen (22) gemessen wird.

4. Elektrische Servolenkungsvorrichtung nach Anspruch 1, **dadurch gekennzeichnet, dass** die Servoeinrichtung (12) Einrichtungen (23) zum Messen der Drehgeschwindigkeit des Lenkrades (2) umfasst und dass die Parametergruppe (P₁, P₂, P₃, P₄, P₅, P₆, P₇) den Wert der Geschwindigkeit (P₃) des Lenkrades umfasst, der durch diese Messeinrichtungen (23) gemessen wird.

5. Elektrische Servolenkungsvorrichtung nach Anspruch 1, **dadurch gekennzeichnet, dass** die Servoeinrichtung (12) Einrichtungen (24) zum Messen der Winkelstellung des Lenkrades (2) umfasst und dass die Parametergruppe (P₁, P₂, P₃, P₄, P₅, P₆, P₇) die Stellung (P₄) des Lenkrades umfasst, die durch diese Messeinrichtungen (24) gemessen wird.

6. Elektrische Servolenkungsvorrichtung nach Anspruch 1, **dadurch gekennzeichnet, dass** die Servoeinrichtung (12) Einrichtungen (25) zum Messen des Momentes umfasst, dass durch den Fahrer auf das Lenkrad (2) ausgeübt wird und dass die Parametergruppe (P₁, P₂, P₃, P₄, P₅, P₆, P₇) das Lenkradmoment (P₅) umfasst, dass durch diese Messeinrichtungen (25) gemessen wird.

7. Elektrische Servolenkungsvorrichtung nach Anspruch 1 oder 6, **dadurch gekennzeichnet, dass** die Steuereinrichtung (16) einen elektronischen Rechenteil (41) und elektronischen Regelteil (42) umfasst, die miteinander verbunden sind, wobei der elektronische Rechenteil (41) am Eingang eine erste Untergruppe von Parametern (P₁, P₂, P₃, P₄, P₅, P₆) aus der besagten Parametergruppe (P₁, P₂, P₃, P₄, P₅, P₆, P₇) umfasst und am Ausgang eine Gruppe von Ausgangswerten (V₁, V₂, V₄) ausgibt und der elektronische Regelteil (42) am Eingang einerseits eine zweite Untergruppe von Parametern (P₅, P₇) aus der Gruppe von Parametern (P₁, P₂, P₃, P₄, P₅, P₆, P₇), die wenigstens einen der beiden Parameter umfasst, die aus dem gemessenen Lenkradmoment (P₅) und dem gemessenen Servomoment (P₇) bestehen, und andererseits die Gruppe von Ausgangswerten (V₁, V₂, V₄) des elektronischen Rechenteils (41) empfängt und am Ausgang einen Wert eines Motorsteuermomentes (C) ausgibt, der einem Signal (S) zum Steuern des Momentes entspricht.

8. Elektrische Servolenkungsvorrichtung nach Anspruch 7, **dadurch gekennzeichnet, dass** die erste Untergruppe von Parametern (P₁, P₂, P₃, P₄, P₅, P₆), die am Eingang des elektronischen Rechenteils (41) empfangen wird, den gemessenen Kraftparameter (P₆) umfasst.

9. Elektrische Servolenkungsvorrichtung nach Anspruch 7 oder 8, **dadurch gekennzeichnet, dass** die Gruppe der Ausgangswerte (V₁, V₂, V₄) des elektronischen Rechenteils (41) einen Sollwert (V₁) des Lenkradmomentes umfasst.

10. Elektrische Servolenkungsvorrichtungen nach einem der Ansprüche 7 bis 9, **dadurch gekennzeichnet, dass** der elektronische Rechtenteil (41) einen ersten Modul (51) zum Berechnen eines Kraftmodells umfasst, der einen Ausgangswert (V₃) ausgibt, der einem Kraftmodell des Auslenkungsmechanismus entspricht, und in Abhängigkeit von Eingangsparametern (P₁, P₄) dieses Moduls berechnet ist.

11. Elektrische Servolenkungsvorrichtung nach den Ansprüchen 2, 5 und 10, **dadurch gekennzeichnet, dass** die besagten Eingangsparameter (P₁, P₄) des Moduls (51) den Parameter (P₁) der Geschwindigkeit des Fahrzeuges und den Parameter (P₄) der Winkelstellung des Lenkrades umfassen.

12. Elektrische Servolenkungsvorrichtung nach einem der Ansprüche 7 bis 11, **dadurch gekennzeichnet, dass** der elektronische Rechenteil (41) einen Modul (52) zum Berechnen der Haftung umfasst, der am Ausgang wenigstens einen Ausgangswert (V₄, V₅) liefert, der für die Haftungsverhältnisse des Fahrzeuges auf der Straße bezeichnend ist.

13. Elektrische Servolenkungsvorrichtung nach Anspruch 12, **dadurch gekennzeichnet, dass** die besagten Ausgangswerte (V₄, V₅) des besagten Moduls (52) zum Berechnen der Haftung einen ersten Ausgangswert (V₅) zwischen 0 und 1 und einen zweiten Ausgangswert (V₄) umfassen, der aus drei bestimmten Werten zwischen 0 und 1, insbesondere jeweils 0,25, 0,6 und 1 gewählt ist.

14. Elektrische Servolenkungsvorrichtung nach Anspruch 12 oder 13, **dadurch gekennzeichnet, dass** die Eingangsparameter des besagten Moduls (52) zum Berechnen der Haftung den Parameter (P₃) der Lenkradgeschwindigkeit und den Kraftparameter (P₆) umfassen.

15. Elektrische Servolenkungsvorrichtung nach den Ansprüchen 10 und 14, **dadurch gekennzeichnet, dass** der Modul (52) zum Berechnen der Haftung am Eingang den Ausgangswert (V₃) des Moduls (51) zum Berechnen des Kraftmodells empfängt.

16. Elektrische Servolenkungsvorrichtung nach einem der Ansprüche 7 bis 15, **dadurch gekennzeichnet, dass** der elektronische Rechenteil (41) einen Modul (53) zum Berechnen des Solllenkradmomentes umfasst, der am Ausgang einen Ausgangswert (V₁) liefert, der für ein Solllenkradmoment bezeichnet ist, das in Abhängigkeit von den Parametern (P₁, P₂, P₃, P₄) und den Werten (V₅) berechnet ist, die am Eingang empfangen werden.

17. Elektrische Servolenkungsvorrichtung nach den Ansprüchen 2 bis 5 und 16, **dadurch gekennzeichnet, dass** die Parameter (P₁, P₂, P₃, P₄), die am Eingang des besagten Moduls (53) zum Berechnen des Solllenkradmomentes empfangen werden, den Parameter (P₁) der Geschwindigkeit des Fahrzeuges, den Parameter (P₂) der Querbeschleunigung des Fahrzeuges, den Parameter (P₃) der Geschwindigkeit des Lenkrades und den Parameter (P₄) der Stellung des Lenkrades umfassen.

18. Elektrische Servolenkungsvorrichtung nach den Ansprüchen 12 und 16, **dadurch gekennzeichnet, dass** die Werte, die am Eingang des Moduls (53) zum Berechnen des Solllenkradmomentes empfangen werden, einen Ausgangswert (V₅) des Moduls (52) zum Berechnen der Haftung umfassen.

19. Elektrische Servolenkungsvorrichtung nach einem der Ansprüche 7 bis 18, **dadurch gekennzeichnet, dass** der elektronische Rechenteil (41) einen Modul (54) zum Berechnen des Regelstatus umfasst, der am Ausgang einen Ausgangswert (V₂) gleich 0 oder 1 liefert, der in Abhängigkeit von den Eingangsparametern (P₃, P₅) und den Werten (V₁) berechnet ist, die am Eingang des Moduls (54) zum Berechnen des Regelstatus empfangen werden.

20. Elektrische Servolenkungsvorrichtung nach den Ansprüchen 4, 6 und 19, **dadurch gekennzeichnet, dass** die Eingangsparameter (P₃, P₅) des besagten Moduls zum Berechnen des Regelstatus den Parameter (P₃) der Lenkradgeschwindigkeit und den Parameter (P₅) des Lenkradmomentes umfassen.

21. Elektrische Servolenkungsvorrichtung nach den Ansprüchen 16 und 19, **dadurch gekennzeichnet, dass** der besagte Modul (54) zum Berechnen des Regelstatus am Eingang den Ausgangswert (V₁) des Moduls (53) zum Berechnen des Solllenkradmomentes empfängt.

22. Elektrische Servolenkungsvorrichtung nach einem der Ansprüche 7 bis 21, **dadurch gekennzeichnet, dass** der elektronische Regelteil (42) am Eingang den gemessenen Parameter (P₇) des Servomomentes empfängt.

23. Elektrische Servolenkungsvorrichtung nach einem der Ansprüche 7 bis 22, **dadurch gekennzeichnet, dass** der elektronische Regelteil am Eingang den gemessenen Parameter (P₅) des Lenkradmomentes empfängt.

24. Elektrische Servolenkungsvorrichtung nach einem der Ansprüche 7 bis 23, **dadurch gekennzeichnet, dass** der elektronische Regelteil zwei Regelbauelemente (61, 62) umfasst, die miteinander verbunden sind, wobei das erste Regelbauelement (61) einen Ausgangswert (C_{A}) in Abhängigkeit von einer ersten Untergruppe von Parametern und den Werten (P₅, V₁, V₂, V₄) ausgibt, die am Eingang des elektronischen Regelteils (42) empfangen werden, und das zweite Regelbauelement (62) am Ausgang den Steuerwert (C) des Momentes abgibt, der in Abhängigkeit von den Eingangsparametern und den Eingangswerten (P₅, P₇, V₁, V₂), die die Eingangsparameter und Eingangswerte des elektronischen Regelteils (42) umfassen, und dem Ausgangswert des ersten Regelbauelementes (61) berechnet wird.

25. Elektrische Servolenkungsvorrichtung nach den Ansprüchen 6, 9 und 24, **dadurch gekennzeichnet, dass** die Eingangsparameter und Eingangswerte (P₅, V₁, V₂, V₄) des ersten Regelbauelementes (61) den Wert der Solllenkradmomentes (V₁), der am Ausgang des elektronischen Rechenteils (41) ausgegeben wird, und den gemessenen Parameter (P₅) des Lenkradmomentes umfassen, wobei der Ausgangswert des ersten Regelbauelementes (61) für einen Sollwert (C_{A}) des Servomomentes bezeichnend ist, der in Abhängigkeit vom Unterschied (V₁ - P₅) der Werte des Einstelllenkradmomentes (V₁) und des gemessenen Lenkradmomentes (P₅) berechnet ist.

26. Elektrische Servolenkungsvorrichtung nach den Ansprüchen 6, 9 und 24, **dadurch gekennzeichnet, dass** die Eingangsparameter und Eingangswerte (P₅, P₇, V₁, V₂) des zweiten Regelbauelementes (62) den Parameter (P₅) des gemessenen Lenkradmomentes und den gemessenen Parameter (P₇) des Servomomentes umfassen, wobei das zweite Regelbauelement (62) am Ausgang den Steuerwert (C) des Momentes ausgibt, der in Abhängigkeit vom Unterschied (C_{A} - P₇) des Sollwertes des Servomomentes, der durch das erste Regelbauelement (61) berechnet wurde, und des gemessenen Wertes (P₇) des Servomomentes berechnet wird.

27. Elektrische Servolenkvorrichtung nach einem der Ansprüche 24 bis 26, **dadurch gekennzeichnet, dass** wenigstens eines der Regelbauelemente (61, 62) ein Proportional-Integral-Differential-Regler ist.

28. Elektrische Servolenkungsvorrichtung nach den Ansprüchen 19 und 24, **dadurch gekennzeichnet, dass** wenigstens eines der Regelbauelemente (61, 62) am Eingang den Ausgangswert (V₂) des Moduls (54) zum Berechnen des Regelstatus empfängt und am Ausgang einen Wert ausgibt, der von diesem Wert (V₂) des Regelstatus abhängt.

29. Verfahren zum Steuern des Elektromotors einer elektrischen Servoeinrichtung einer Lenkvorrichtung eines Kraftfahrzeuges mittels Momentensteuersignals, welche Lenkvorrichtung eine Drehlenksäule (4) umfasst, die an einem Ende ein Lenkrad (2) und am anderen Ende ein Übertragungselement (7) trägt, dass mit einer Zahnstange (8) zusammen arbeitet, die translationsbeweglich ist und an ihren Enden (11) jeweils einen Mechanismus (10) zum Auslenken der gelenkten Räder des Fahrzeuges aufweist, welche Servoeinrichtung (12) einen Elektromotor (15), der ein Servoelement (20) antreibt, das mit der Zahnstange (8) oder der Lenksäule (4) zusammenarbeitet, und eine Steuereinrichtung (16) umfasst, die dem besagten Elektromotor (15) einen Steuersignal (S) liefert, das geeignet ist, das Ausgangsmoment (Cₛ) des Elektromotors (15) zu ändern, **dadurch gekennzeichnet, dass** man das Steuersignal (S) des Momentes in folgender Weise bildet:
- Man misst den Kraftparameter (P₆), der dem Wert der Kräfte entspricht, die von wenigstens einem der Auslenkungsmechanismen (10) auf die Zahnstange (8) ausgeübt wird,
- Man berechnet einen Sollwert (V₁) des Lenkradmomentes in Abhängigkeit einer Parametergruppe (P₁, P₂, P₃, P₄, P₅, P₆) der Funktion der Lenksäule und/oder allgemein des Fahrzeuges, welche Gruppe den besagten gemessenen Kraftparameter (P₆) umfasst,
- Man misst den Wert des Momentes (P₅), das durch den Fahrer auf das Lenkrad ausgeübt wird,
- Man berechnet einen Steuerwert (C) für das Motormoment nach einem Regelprozess in Abhängigkeit von dem Unterschied zwischen dem gemessenen Lenkradmoment (P₅) und dem Solllenkradmoment (V₁),
- Man bildet das Momentensteuersignal (S), das dem besagten Momentensteuerwert (C) entspricht.

30. Verfahren zum Steuern nach Anspruch 29, **dadurch gekennzeichnet, dass** der Regelprozess eine erste Regelschleife umfasst, in der man ein Sollservomoment (C_{A}) in Abhängigkeit vom Unterschied zwischen dem gemessenen Parameter (P₅) des Lenkradmomentes und dem berechneten Sollwert (V₁) des Lenkradmomentes berechnet.

31. Verfahren zum Steuern nach Anspruch 30, **dadurch gekennzeichnet, dass** die erste Regelschleife auf den Unterschied zwischen dem gemessenen Parameter (P₅) des Lenkradmomentes und dem Sollwert (V₁) des Lenkradmomentes ein erstes Proportional-Integral-Differentialregelgesetz anwendet, dessen Koeffizienten (K_{P1}, K_{I1}, K_{D1}) vorbestimmt sind.

32. Verfahren zum Steuern nach Anspruch 30 oder 31, **dadurch gekennzeichnet, dass**:
- man das Servomoment (P₇) misst, das vom Motor (15) auf das Servoelement (20) ausgeübt wird,
- der Regelprozess eine zweite Regelschleife umfasst, in der man das Motorsteuermoment (C) in Abhängigkeit vom Unterschied zwischen dem gemessenen Parameter (P₇) des Servomomentes und dem Sollwert (C_{A}) des Servomomentes berechnet.

33. Verfahren zum Steuern nach Anspruch 32, **dadurch gekennzeichnet, dass** die zweite Regelschleife auf den Unterschied zwischen dem gemessenen Parameter (P₇) des Servomomentes und dem berechneten Sollwert (C_{A}) des Servomomentes ein zweites Proportional-Integral-Differentialregelgesetz anwendet, dessen Koeffizienten (K_{P2}, K_{I2} K_{D2}) vorbestimmt sind.

34. Verfahren zum Steuern nach einem der Ansprüche 29 bis 33, **dadurch gekennzeichnet, dass** man den Sollwert (V₁) des Lenkradmomentes nach einem Rechenvorgang berechnet, der die folgenden Schritte umfasst:
- Man misst einen Parameter (P₁) der Geschwindigkeit des Fahrzeuges,
- Man misst einen Parameter (P₄) der Winkelstellung des Lenkrades, der für die Winkelstellung des Lenkrades (2) bezüglich einer neutralen Position ohne Lenkausschlag bezeichnend ist,
- Man berechnet einen theoretischen Wert der Kraft (V₃) des Auslenkungsmechanismus in Abhängigkeit von den besagten gemessenen Parametern (P₁, P₄) der Fahrzeuggeschwindigkeit und der Lenkradstellung mittels einer Kartographie mit zwei Eingängen.

35. Verfahren zum Steuern nach Anspruch 34, **dadurch gekennzeichnet, dass** der Rechenvorgang weiterhin die folgenden Schritte umfasst:
- Man misst einen Parameter (P₃) der Drehgeschwindigkeit des Lenkrades,
- Man berechnet in Abhängigkeit von dem besagten gemessenen Parameter (P₃) der Drehgeschwindigkeit des Lenkrades, dem gemessenen Kraftparameter (P₆) und dem berechneten theoretischen Kraftwert (V₃) einen Koeffizienten (V₅) des Lenkradmomentes, der für die Haftungsbedingungen des Fahrzeuges auf der Straße bezeichnend ist, sowie einen Haftungskoeffizienten (V₄), der selektiv einen von wenigstens zwei festen Werten annehmen kann, die für jeweilige Haftungsverhältnisse bezeichnet sind.

36. Verfahren zum Steuern nach Anspruch 35, **dadurch gekennzeichnet, dass** der berechnete Koeffizient (V₅) des Lenkradmomentes zwischen 0 und 1 liegt, und der modifizierte Haftungskoeffizient (V₄) wahlweise einen von drei Werten 0,25, 0,6 und 1 annehmen kann.

37. Verfahren zum Steuern nach Anspruch 36, **dadurch gekennzeichnet, dass** der Rechenvorgang weiterhin die folgenden Schritte umfasst:
- Man misst den Wert des Querbeschleunigungsparameters (P₂) des Fahrzeuges,
- Man berechnet den Wert des Solllenkradmomentes (V₁) in Abhängigkeit von den gemessenen Parametern (P₁, P₂, P₃, P₄) der Geschwindigkeit des Fahrzeuges, der Querbeschleunigung des Fahrzeuges, der Winkelgeschwindigkeit des Lenkrades und der Winkelstellung des Lenkrades und in Abhängigkeit vom berechneten Koeffizienten (V₅) des Lenkradmomentes.

38. Verfahren zum Steuern nach Anspruch 37, **dadurch gekennzeichnet, dass** man den Sollwert des Lenkradmomentes (V₁) mittels einer Kartographie mit zwei Eingängen berechnet, in die die Werte der Parameter (P₁, P₂) der Geschwindigkeit und Querbeschleunigung des Fahrzeuges eingehen und die einen Ausgangswert liefert, der durch Zwischenkoeffizienten korrigiert ist, die jeweils für den Parameter (P₃) der Winkelgeschwindigkeit des Lenkrades, den Parameter (P₄) bei zwei Winkelstellungen des Lenkrades und den Koeffizienten (V₅) des Lenkradmomentes bezeichnend sind, wobei der Sollwert (V₁) des Lenkradmomentes gleich dem Produkt dieses Ausgangswertes der Kartographie und der besagten Zwischenkoeffizienten ist.

39. Verfahren zum Steuern nach Anspruch 37 oder 38, **dadurch gekennzeichnet, dass** der Rechenvorgang weiterhin den folgenden Schritt umfasst:
- Man berechnet einen Wert (V₂) des Regelstatus gleich entweder 0 oder 1 in Abhängigkeit von den gemessenen Parametern (P₃, P₅) der Winkelgeschwindigkeit des Lenkrades und des Lenkradmomentes des berechneten Solllenkradmomentes (V₁) und des berechneten modifizierten Haftungskoeffizienten (V₄).

40. Verfahren zum Steuern nach Anspruch 39, **dadurch gekennzeichnet, dass** der Wert (V₂) des Regelstatus gleich 1 ist, wenn der gemessene Wert des Parameters (P₅) des Lenkradmomentes das gleiche Vorzeichen wie der berechnete Wert des Solllenkradmomentes (V₁) hat und wenn der Absolutwert des gemessenen Parameters (P₅) des Lenkradmomentes größer der berechnete Absolutwert des Sollwertes (V₁) des Lenkradmomentes ist.

41. Verfahren zum Steuern nach den Ansprüchen 30 und 39, **dadurch gekennzeichnet, dass** man das Sollservomoment (C_{A}) in Abhängigkeit von dem Wert des Regelstatus (V₂) und dem berechneten Wert des modifizierten Haftungskoeffizienten (V₄) berechnet.

42. Verfahren zum Steuern nach Anspruch 41, **dadurch gekennzeichnet, dass** dann, wenn der berechnete Wert des Regelstatus (V₂) gleich Null ist, der Sollwert des Servomomentes (C_{A}) gleich Null ist.

43. Verfahren zum Steuern nach den Ansprüchen 32 und 39, **dadurch gekennzeichnet, dass** man den Wert des Steuermomentes (C) in Abhängigkeit von dem berechneten Wert des Regelstatus (V₂) berechnet.

44. Kraftfahrzeug mit einer Servolenkungsvorrichtung nach einem der Ansprüche 1 bis 28 oder einer Servolenkungsvorrichtung, die nach dem Verfahren nach einem der Ansprüche 29 bis 43 arbeitet.

## Claims

1. Electrically assisted steering assembly comprising a rotating steering shaft (4) with, at one end, a steering wheel (2) and at its other end, a transmission unit (7) cooperating with a rack (8) that moves in a straight line, linked at each of its ends (11) to a mechanism (10) for orienting the guiding wheels of the vehicle, the assistance device (12) comprising an electric motor (15) which drives an assistance unit (20) cooperating with the rack (8) or the steering shaft (4), and a control device (16) supplying said electric motor (15) with a control signal (S) designed to vary the output torque (Cₛ) of the electric motor (15), according to a set (P₁, P₂, P₃, P₄, P₅, P₆, P₇) of operating parameters of the steering shaft and/or, more generally, of the vehicle, **characterized in that** the assistance device (12) comprises means (26a, 26b) of measuring the forces exerted by at least one of the orientation mechanisms (10) on the rack (8), and means (27) of measuring the assistance torque exerted by the motor (15) on the assistance unit (20), and **in that** the set of parameters (P₁, P₂, P₃, P₄, P₅, P₆, P₇) includes the force value (P₆) and the assistance torque value (P₇) measured by said measurement means (26a, 26b, 27).

2. Electrically assisted steering assembly according to Claim 1, **characterized in that** the assistance device (12) comprises means (21) of measuring the speed of the vehicle, and the set of parameters (P₁, P₂, P₃, P₄, P₅, P₆, P₇) includes the speed value (P₁) measured by said measurement means (21).

3. Electrically assisted steering assembly according to Claim 1, **characterized in that** the assistance device (12) includes means (22) of measuring the transverse acceleration of the vehicle, and the set of parameters (P₁, P₂, P₃, P₄, P₅, P₆, P₇) includes the acceleration value (P₂) measured by said measurement means (22).

4. Electrically assisted steering assembly according to Claim 1, **characterized in that** the assistance device (12) includes means (23) of measuring the speed of rotation of the steering wheel (2), and the set of parameters (P₁, P₂, P₃, P₄, P₅, P₆, P₇) includes the steering wheel speed value (P₃) measured by said measurement means (23).

5. Electrically assisted steering assembly according to Claim 1, **characterized in that** the assistance device (12) includes means (24) of measuring the angular position of the steering wheel (2), and the set of parameters (P₁, P₂, P₃, P₄, P₅, P₆, P₇) includes the position of the steering wheel (P₄) measured by said measurement means (24).

6. Electrically assisted steering assembly according to Claim 1, **characterized in that** the assistance device (12) includes means (25) of measuring the torque exerted on the steering wheel (2) by the driver, and the set of parameters (P₁, P₂, P₃, P₄, P₅, P₆, P₇) includes the steering wheel torque (P₅) measured by said measurement means (25).

7. Electrically assisted steering assembly according to Claim 1 or 6, **characterized in that** the control device (16) comprises an electronic computation unit (41) and an electronic control unit (42) which are interlinked, said electronic computation unit (41) receiving as input a first subset of parameters (P₁, P₂, P₃, P₄, P₅, P₆) from said set of parameters (P₁, P₂, P₃, P₄, P₅, P₆, P₇) and producing as output a set of output values (V₁, V₂, V₄), and said electronic control unit (42) receiving as input, on the one hand, a second subset of parameters (P₅, P₇) from said set of parameters (P₁, P₂, P₃, P₄, P₅, P₆, P₇) including at least one of the two parameters comprising the measured steering wheel torque (P₅) and the measured assistance torque (P₇), and on the other hand, said set of output values (V₁, V₂, V₄) from the electronic computation unit (41), and producing as output a motor control torque value (C), corresponding to the torque control signal (S).

8. Electrically assisted steering assembly according to Claim 7, **characterized in that** the first subset (P₁, P₂, P₃, P₄, P₅, P₆) of parameters received at the input of the electronic computation unit (41) includes the measured force parameter (P₆).

9. Electrically assisted steering assembly according to Claim 7 or 8, **characterized in that** the set of output values (V₁, V₂, V₄) from the electronic computation unit (41) includes a setpoint steering wheel torque value (V₁).

10. Electrically assisted steering assembly according to any one of Claims 7 to 9, **characterized in that** the electronic computation unit (41) includes a first modelled force computation module (51), outputting a value (V₃) corresponding to an orientation mechanism force model computed according to the input parameters (P₁, P₄) of said module.

11. Electrically assisted steering assembly according to Claims 2, 5 and 10 taken together, **characterized in that** said input parameters (P₁, P₄) of said module (51) include the vehicle speed parameter (P₁) and the steering wheel angular position parameter (P₄).

12. Electrically assisted steering assembly according to any one of Claims 7 to 11, **characterized in that** the electronic computation unit (41) includes a skid resistance computation module (52) outputting at least one output value (V₄, V₅) indicative of the skid resistance conditions of the vehicle on the road.

13. Electrically assisted steering assembly according to Claim 12, **characterized in that** said output values (V₄, V₅) of said skid resistance computation module (52) include a first output value (V₅) of between 0 and 1, and a second output value (V₄) chosen from three predetermined values, notably respectively equal to 0.25, 0.6 and 1, between 0 and 1.

14. Electrically assisted steering assembly according to Claim 12 or 13, **characterized in that** the input parameters of said skid resistance computation module (52) include the steering wheel speed parameter (P₃) and the force parameter (P₆).

15. Electrically assisted steering assembly according to Claims 10 and 14 taken together, **characterized in that** said skid resistance computation module (52) receives as input the output value (V₃) of the modelled force computation module (51).

16. Electrically assisted steering assembly according to any one of Claims 7 to 15, **characterized in that** the electronic computation unit (41) includes a setpoint steering wheel torque computation module (53) producing an output value (V₁) indicative of a setpoint steering wheel torque computed according to parameters (P₁, P₂, P₃, P₄) and values (V₅) received as input.

17. Electrically assisted steering assembly according to Claims 2 to 5 and 16 taken together, **characterized in that** the parameters (P₁, P₂, P₃, P₄) received as input by said setpoint steering wheel torque computation module (53) include the vehicle speed parameter (P₁), the transverse acceleration parameter of the vehicle (P₂), the steering wheel speed parameter (P₃), and the steering wheel position parameter (P₄).

18. Electrically assisted steering assembly according to Claims 12 and 16 taken together, **characterized in that** the values received as input for said setpoint steering wheel torque computation module (53) include an output value (V₅) from the skid resistance computation module (52).

19. Electrically assisted steering assembly according to any one of Claims 7 to 18, **characterized in that** the electronic computation unit (41) includes a control status computation module (54) producing an output value (V₂) equal to 0 or 1, computed according to input parameters (P₃, P₅) and values (V₁) received as input from said control status computation module (54).

20. Electrically assisted steering assembly according to Claims 4, 6 and 19 taken together, **characterized in that** the input parameters (P₃, P₅) of said control status computation module include the steering wheel speed parameter (P₃) and the steering wheel torque parameter (P₅).

21. Electrically assisted steering assembly according to Claims 16 and 19 taken together, **characterized in that** said control status computation module (54) receives as input the output value (V₁) of the setpoint steering wheel torque computation module (53).

22. Electrically assisted steering assembly according to any one of Claims 7 to 21, **characterized in that** the electronic control unit (42) receives as input the measured assistance torque parameter (P₇).

23. Electrically assisted steering assembly according to any one of Claims 7 to 22, **characterized in that** the electronic control unit receives as input the measured steering wheel torque parameter (P₅).

24. Electrically assisted steering assembly according to any one of Claims 7 to 23, **characterized in that** the electronic control unit comprises two interlinked control units (61, 62), the first control unit (61) producing an output value (C_{A}) according to a first subset of parameters and values (P₅, V₁, V₂, V₄) received as input from the electronic control unit (42), and the second control unit (62) outputting the torque control value (C) computed according to input parameters and values (P₅, P₇, V₁, V₂) including input parameters and values of the electronic control unit (42) and the output value from the first control unit (61).

25. Electrically assisted steering assembly according to Claims 6, 9 and 24 taken together, **characterized in that** the input parameters and values (P₅, V₁, V₂, V₄) of the first control unit (61) include the setpoint steering wheel torque value (V₁) output from the electronic computation unit (41) and the measured steering wheel torque parameter (P₅), the output value of said first control unit (61) being indicative of a setpoint assistance torque value (C_{A}) computed according to the difference (V₁-P₅) between the setpoint steering wheel torque value (V₁) and the measured steering wheel torque value (P₅).

26. Electrically assisted steering assembly according to Claims 6, 9 and 24 taken together, **characterized in that** the input parameters and values (P₅, P₇, V₁, V₂) of the second control unit (62) include the measured steering wheel torque parameter (P₅) and the measured assistance torque parameter (P₇), said second control unit (62) outputting the torque control value (C) computed according to the difference (C_{A}-P₇) between the setpoint assistance torque value computed by the first control unit (61) and the measured assistance torque value (P₇).

27. Electrically assisted steering assembly according to any one of Claims 24 to 26, **characterized in that** at least one of the control units (61, 62) is a PID controller.

28. Electrically assisted steering assembly according to Claims 19 and 24 taken together, **characterized in that** at least one of the control units (61, 62) receives as input the output value (V₂) from the control status computation module (54), and produces as output a value dependent on said control status value (V₂).

29. Method of controlling, by a torque control signal, the electric motor of an electrical assistance device of a motor vehicle steering assembly, comprising a rotating steering shaft (4) with, at one end, a steering wheel (2) and, at its other end, a transmission unit (7) cooperating with a rack (8) which moves in a straight line, linked at each of its ends (11) to a mechanism (10) for orienting the guiding wheels of the vehicle, the assistance device (12) comprising an electric motor (15) which drives an assistance unit (20) cooperating with the rack (8) or the steering shaft (4), and a control device (16) supplying said electric motor (15) with a control signal (S) designed to vary the output torque (Cₛ) of the electric motor (15), **characterized in that** the torque control signal (S) is generated as follows:
- the force parameter (P₆) corresponding to the value of the forces exerted by at least one of the orientation mechanisms (10) on the rack (8) is measured;
- a setpoint steering wheel torque value (V₁) is computed according to a set (P₁, P₂, P₃, P₄, P₅, P₆) of operation parameters of the steering shaft and/or, more generally, of the vehicle, said set including said measured force parameter (P₆);
- the value of the torque (P₅) exerted by the driver on the steering wheel (2) is measured;
- a motor torque control value (C) is computed according to a control procedure based on the difference between the measured steering wheel torque (P₅) and the setpoint steering wheel torque (V₁);
- the torque control signal (S) which corresponds to said torque control value (C) is generated.

30. Control method according to Claim 29, **characterized in that** the control method includes a first control loop in which a setpoint assistance torque (C_{A}) is computed according to the difference between the measured steering wheel torque parameter (P₅) and the computed setpoint steering wheel torque value (V₁).

31. Control method according to Claim 30, **characterized in that** said first control loop applies a first PID control law for which the coefficients (K_{P1}, K_{I1}, K_{D1}) are predetermined to the difference between the measured steering wheel torque parameter (P₅) and the setpoint steering wheel torque value (V₁).

32. Control method according to Claim 30 or 31, **characterized in that**:
- the assistance torque (P₇) exerted by the motor (15) on the assistance unit (20) is measured;
- the control method includes a second control loop in which the motor control torque (C) is computed according to the difference between said measured assistance torque parameter (P₇) and the setpoint assistance torque value (C_{A}).

33. Control method according to Claim 32, **characterized in that** said second control loop applies a second PID control law for which the coefficients (K_{P2}, K_{I2}, K_{D2}) are predetermined to the difference between the measured assistance torque parameter (P₇) and the computed setpoint assistance torque value (C_{A}).

34. Control method according to any one of Claims 29 to 33, **characterized in that** the setpoint steering wheel torque value (V₁) is computed according to a computation method which comprises the following steps:
- a vehicle speed parameter (P₁) is measured;
- a steering wheel angular position parameter (P₄) indicative of the angular position of the steering wheel (2) relative to a zero-lock neutral position is measured;
- a theoretical orientation mechanism force value (V₃) is computed according to said measured vehicle speed (P₁) and steering wheel position (P₄) parameters, using a two-input map.

35. Control method according to Claim 34, **characterized in that** the computation method also comprises the following steps:
- a steering wheel rotation speed parameter (P₃) is measured;
- a steering wheel torque coefficient (V₅) indicative of the skid resistance conditions of the vehicle on the road, and a skid resistance coefficient (V₄) which can selectively take at least one of two fixed values, indicative of respective skid resistance conditions, are computed, according to said measured steering wheel rotation speed parameter (P₃), the measured force parameter (P₆), and the computed theoretical force value (V₃).

36. Control method according to Claim 35, **characterized in that** the computed steering wheel torque coefficient (V₅) is within a range between 0 and 1 and the modified skid resistance coefficient (V₄) can selectively take one of three values equal to 0.25, 0.6 and 1.

37. Control method according to Claim 36, **characterized in that** the computation method also comprises the following steps:
- the value of the vehicle transverse acceleration parameter (P₂) is measured;
- the setpoint steering wheel torque value (V₁) is computed according to the measured vehicle speed (P₁), vehicle transverse acceleration (P₂), steering wheel angular speed (P₃) and steering wheel angular position (P₄) parameters, and the computed steering wheel torque coefficient (V₅).

38. Control method according to Claim 37, **characterized in that** the setpoint steering wheel torque value (V₁) is computed using a two-input map receiving the values of the vehicle speed (P₁) and transverse acceleration (P₂) parameters, and which outputs a value corrected by intermediate coefficients respectively indicative of the steering wheel angular speed parameter (P₃), the steering wheel parameter with two angular positions (P₄), and the steering wheel torque coefficient (V₅), the setpoint steering wheel torque value (V₁) being equal to the product of said map output value and said intermediate coefficients.

39. Control method according to Claim 37 or 38, **characterized in that** the computation method also comprises the following step:
- a control status value (V₂), equal either to 0 or 1, is computed according to the measured steering wheel angular speed (P₃) and steering wheel torque (P₅) parameters, the computed setpoint steering wheel torque value (V₁), and the computed modified skid resistance coefficient (V₄).

40. Control method according to Claim 39, **characterized in that** the control status value (V₂) is equal to 1 if the measured steering wheel torque parameter value (P₅) has the same sign as the computed setpoint steering wheel torque value (V₁), and if the absolute value of the measured steering wheel torque parameter (P₅) is greater than the absolute value of the computed setpoint steering wheel torque value (V₁).

41. Control method according to Claims 30 and 39 taken together, **characterized in that** the setpoint assistance torque (C_{A}) is computed according to the control status value (V₂) and the computed modified skid resistance coefficient value (V₄).

42. Control method according to Claim 41, **characterized in that** if the computed control status value (V₂) is equal to 0, the setpoint assistance torque value (C_{A}) is equal to 0.

43. Control method according to Claims 32 and 39 taken together, **characterized in that** the torque control value (C) is computed according to the computed control status value (V₂).

44. Motor vehicle comprising an assisted steering assembly according to any one of Claims 1 to 28, or an assisted steering assembly operating according to the method according to any one of Claims 29 to 43.
